# FASCICULE DE BREVET EUROPEEN

(11) **EP 1 967 335 B1**
(45) Date de publication et mention de la délivrance du brevet: **26.01.2011**
(21) Numéro de dépôt: 08102234.5
(22) Date de dépôt: 04.03.2008
(51) Int. Cl.: B25J 21/02, G21F 7/053

(54) **Dispositif de changement d'un gant d'une boîte á gants pour manipulation dans un milieu confiné, et procédé de changement de gant corespondant**
Vorrichtung zum Auswechseln eines Handschuhs eines Handschuhkastens für die Handhabung in einem abgeschlossenen Raum und zugehöriges Verfahren zur Handschuhauswechselung
Device for changing the glove of a glove box for manipulation inside a confined space and corresponding method for changing a glove

(30) Priorité: 05.03.2007 FR 0753644
(43) Date de publication de la demande: 10.09.2008
(73) Titulaire: Getinge La Calhene, 41100 Vendôme (FR)
(72) Inventeur: Rohard, Michel, 41800 Houssay (FR)
(74) Mandataire: Poulin, Gérard

(56) Documents cités:
- EP-A- 0 022 290
- EP-A- 0 418 160
- EP-A- 0 549 450
- EP-A1- 0 030 565
- WO-A-98/24599
- DE-A1- 2 449 104
- DE-B- 1 259 659
- FR-A- 2 449 516
- FR-A1- 2 856 328
- GB-A- 2 243 103
- US-A- 4 141 609
- US-A1- 2002 189 007

## Description

### DOMAINE TECHNIQUE ET ART ANTÉRIEUR

La présente invention se rapporte principalement à un dispositif de changement de gants de manipulation en milieux confinés, notamment dans les domaines nucléaire et chimique, et à un procédé de changement de gant mettant en oeuvre un tel dispositif.

La manipulation de produits toxiques, tels que des éléments radioactifs ou des produits chimiques très volatiles s'effectue de manière courante dans des milieux confinés. Les milieux confinés sont également utilisés pour protéger des éléments de la pollution extérieure, lorsque l'on recherche une manipulation en milieu stérile, par exemple dans le cas de l'industrie pharmaceutique ou alimentaire.

Ces milieux confinés comportent une enceinte sensiblement étanche. Afin de pouvoir réaliser des manipulations de l'extérieur de l'enceinte, celle-ci comporte des ouvertures auxquelles sont fixés des gants. Ainsi, une personne en introduisant une main dans un gant, peut manipuler les objets contenus dans l'enceinte sans risque de les polluer et sans risque d'être contaminée.

Ces gants sont fixés sur l'enceinte par serrage sur une bague solidaire de l'enceinte. En effet les gants étant réalisés en matériau souple et élastique, il est possible de les déformer au moins légèrement pour venir entourer la bague. Le maintien du gant sur la bague est confirmé par un joint torique.

Se pose alors le problème du changement de gant en évitant de rompre le confinement de l'enceinte et en réduisant les risques de contact avec le gant usagé.

Il est connu du document FR 2 685 244, une méthode pour changer un gant fixé à une manchette par l'intermédiaire d'une bague, tel que décrit précédemment. Cette méthode prévoit d'une part d'isoler le gant de l'intérieur de l'enceinte au moyen d'un bouchon avant d'effectuer le changement, puis de disposer un gant neuf sur la bague par-dessus le gant usagé du côté extérieur de l'enceinte, d'introduire ensuite sa main dans le gant neuf et de désolidariser le gant usagé de la bague. Le gant usagé se retrouve dans l'enceinte et doit ensuite être évacué.

Cette méthode est assez complexe à mettre en oeuvre, de plus elle ne propose aucune solution pour évacuer le gant usagé.

En outre, le mode de fixation du gant sur l'enceinte impose d'utiliser un matériau relativement épais, ce qui réduit la dextérité des mouvements et la sensibilité au niveau du toucher, ce qui peut être pénalisant pour certaines manipulations.

Il existe également un gant comportant une bague bordant son ouverture, sur laquelle est fixé un couvercle de manière à ce que lorsque le gant est retourné, l'intérieur du gant soit isolé de l'environnement extérieur. Ce gant est destiné à être fixé sur une bague, ladite ouverture étant obturée par un couvercle. Le gant est solidarisé à l'enceinte par des moyens type baïonnette par rotation de la bague du gant par rapport à la bague de l'enceinte. On introduit ensuite une main dans le gant et on retire simultanément les deux couvercles pour pouvoir pénétrer dans l'enceinte.

Ce dispositif est très performant et très sûr, tant au niveau de l'intégrité de l'isolement que de la propreté du gant, cependant le gant et le dispositif de montage sont relativement complexes.

Il est également connu du document WO 98/24599, un système d'attache de gant sur une manchette. Le gant est accroché sur une bague et la manchette comporte une bague, dans laquelle la bague de gant est insérée de manière étanche, l'immobilisation axiale de la bague de gant dans la bague de manchette s'effectue au moyens de deux anneaux montés dans des gorges sur la périphérie extérieure de la bague de gant et formant butée axiale. Pour le changement de gant, il est nécessaire de retirer un premier anneau de la bague du gant usagé, de le monter sur la bague du gant neuf, de retirer partiellement la bague du gant usagé de la bague de manchette. Une partie de la bague du gant neuf est ensuite introduite dans la bague de manchette, simultanément la bague de gant usagé coulisse vers l'extérieur de la bague de manchette, et la bague du gant neuf coulisse vers l'intérieur de la bague de manchette. Puis, lorsque la bague du gant usagé est complètement retirée, l'autre anneau de la bague du gant usagé est placé sur la bague du gant neuf.

Cette opération de changement de gant est longue et fastidieuse. Par ailleurs, rien ne garantit la continuité de l'isolation entre l'environnement extérieur et l'environnement intérieur, et enfin la manipulation du gant neuf s'effectue nécessairement avec un gant usagé, ce qui risque fortement de le souilier.

Le document DE 24 49 104 décrit un dispositif de changement de gant, le dispositif comporte une pièce portant à une extrémité le gant neuf, cette pièce poussant la bague du gant neuf qui est en appui sur celle du gant usagé, le gant usagé est expulsé dans l'enceinte. Ce dispositif ne comporte aucune pièce pour recevoir le gant usagé.

C'est par conséquent un but de la présente invention d'offrir un dispositif de changement de gant offrant une grande sûreté à la fois pour le confinement et pour les manipulateurs.

C'est également un but de la présente invention d'offrir un dispositif de changement de gant d'emploi simple et rapide.

### EXPOSÉ DE L'INVENTION

Les buts précédemment énoncés sont atteints par un dispositif de changement de gant pour manipulation dans des espaces confinés comportant une partie destinée à être disposée dans l'enceinte et recevant dans un premier temps un gant neuf et une deuxième partie destinée à être disposée à l'extérieur de l'enceinte et recevant dans un deuxième temps un gant usagé. Le gant selon la présente invention comporte une bague bordant l'ouverture du gant, la bague du gant étant apte à se solidariser à l'enceinte et à se désolidariser de l'enceinte par application d'un effort axial.

En d'autres termes, la fixation du gant neuf sur l'enceinte s'effectue simultanément au retrait du gant usagé par application d'un effort de poussée, le gant neuf étant à l'intérieur de l'enceinte et le gant usagé étant à l'extérieur de l'enceinte pour son évacuation.

La présente invention offre l'avantage de pouvoir mettre en place des gants stériles, puisque toute manipulation du gant neuf s'effectue en milieu confiné. Ainsi il peut être prévu de disposer le gant stérile contenu dans une poche fermée et de n'ouvrir cette poche que dans l'enceinte. A l'inverse dans le premier état de la technique décrit, le gant neuf est mis en place à l'extérieur de l'enceinte, qui a priori n'est pas stérile.

La présente invention a alors principalement pour objet un dispositif de changement d'un gant de manipulation dans des espaces confinés, ledit dispositif étant destiné à remplacer un gant usagé par un gant neuf, chaque gant comportant une partie de réception de la main en matériau souple et une bague de gant d'axe longitudinal bordant une ouverture du gant pour l'introduction de la main, ladite bague de gant comportant également des moyens de fixation à un élément fixé à une enceinte de confinement, ledit élément comportant une bague dite bague de l'élément de diamètre sensiblement égal au diamètre extérieur d'un premier manchon de la bague de gant et comportant des moyens de fixation pour coopérer avec les moyens de fixation que comporte ladite bague de gant, lesdits moyens de fixation étant aptes à être verrouillés et déverrouillés par application d'un effort sensiblement axial, lesdits moyens de fixation que comporte ladite bague de l'élément étant solidaires de ladite bague de l'élément, le dispositif comportant un support muni d'une cavité pour recevoir un gant neuf, un poussoir muni d'une cavité pour recevoir un gant usagé et des moyens pour transférer le gant neuf du support à l'élément de l'enceinte en lieu et place du gant usagé et transférer le gant usagé de l'élément de l'enceinte au poussoir.

Dans le dispositif selon l'invention, le gant étant muni d'une bague comportant un premier manchon de plus grand diamètre et un deuxième manchon de plus petit diamètre raccordés par une portée annulaire, la cavité du support est de diamètre sensiblement égal au diamètre extérieur de deuxième manchon de la bague de gant.

Quant à la cavité du poussoir, celle-ci est avantageusement de diamètre sensiblement égal au diamètre extérieur du premier manchon de la bague de gant.

Le poussoir peut comporter une surface de poussée destinée à venir en appui sur une face d'extrémité de la bague dudit élément, ladite surface de poussée comportant une forme complémentaire à celle de la face d'extrémité de la bague de l'élément.

De manière avantageuse, la cavité du poussoir comporte un moyen de retenue de la bague de gant, pour éviter de la perdre, lorsque le poussoir est retiré.

Le dispositif de changement de gant comporte avantageusement des moyens d'assistance au changement de gant de manière à assurer l'application d'une charge constante sur la bague du gant neuf, afin d'assurer un montage adéquate.

Dans un exemple de réalisation particulièrement intéressant, le support comporte un corps et un piston mobile axialement dans un alésage axial du corps, ledit piston étant destiné à transférer un couvercle de protection du gant neuf vis-à-vis du gant usagé, de la bague du gant neuf à la du gant usagé, ledit piston étant maintenu en position repos par un moyen de rappel pour permettre la mise en place du gant neuf dans la cavité du support.

Le piston peut coulisser dans le corps entre une première position dans laquelle le piston est en saillie d'un fond extérieur du corps opposé à la cavité, et une deuxième position dans laquelle le piston est en saillie du fond de la cavité.

Le piston comporte avantageusement une embase du côté opposé à la cavité du corps et un disque dans la cavité destiné à venir en contact avec le couvercle de protection.

Le moyen de rappel est, par exemple formé par un ressort interposé entre l'embase et le corps du support.

La présente invention a également pour objet un système de changement de gant comportant un dispositif de changement de gant selon la présente invention et au moins un couvercle de protection, ledit couvercle étant destiné à être monté dans la bague du gant neuf avant le changement de gant. Ce système permet d'effectuer un changement de gant avec une grande sécurité puisque le gant usagé est complètement isolé.

La présente invention a également pour objet un procédé de changement d'un gant mettant en oeuvre un dispositif selon la présente invention, comportant les étapes suivantes
a) de mise en place d'un gant neuf dans la cavité du support,
b) de mise en place du poussoir en appui sur la bague de l'élément dans laquelle est fixé le gant usagé,
c) de mise en place de la bague du gant usagé dans la bague du gant neuf,
d) de transfert du gant usagé de la bague de l'élément à la cavité du poussoir et de transfert simultané de la bague du gant neuf de la cavité du support à la bague de l'élément, par application d'un effort sur le poussoir en direction du support.

Une étape préalable à l'étape a), de mise en place dans l'enceinte d'au moins un gant neuf et du support peut être prévue.

Le procédé peut comporter une étape préalable à l'étape b) de retournement du gant usagé.

Le procédé selon l'invention mettant en oeuvre un système de changement de gant selon la l'invention comporte par exemple une étape préalable à l'étape a) de mise en place d'un couvercle de protection dans la bague du gant neuf. Le couvercle est mis sur la bague de gant neuf avantageusement lors de sa fabrication pour être sûr de sa propreté. En effet l'intérêt du couvercle est de limiter le contact entre l'opérateur et le gant usagé, autrement dit le contact entre l'opérateur et les produits à l'intérieur de l'isolateur. Pour une application agro-alimentaire, il s'agit des souillures liées au produit fabriqué, pour une application pharmaceutique ou chimique, il s'agit par exemple d'un produit toxique. Grâce à cette mise en place lors de la fabrication, on évite toute manipulation du couvercle dans l'isolateur, et on supprime le risque de contact entre le produit (souillure/produit toxique) et les deux faces du couvercle, de sorte que la face du couvercle "visible" après l'opération de changement de gant reste « propre » de souillures ou de contaminations.

Le gant neuf est alors en permanence isolé du gant usagé, et le couvercle alors transféré sur la bague du gant usagé, confine avantageusement le gant usagé.

Le procédé selon l'invention peut également comporter une étape préalable à l'étape d) de transfert du couvercle de la bague du gant neuf à la bague du gant usagé par application d'un effort de première intensité de poussée sur le poussoir en direction du support. Lors de l'étape d), le transfert s'effectue par application d'un effort de deuxième intensité supérieure à la première intensité sur le poussoir en direction du support, pour transférer la bague du gant neuf du support à la bague de l'élément et transférer la bague du gant usagé de la bague de l'élément au poussoir.

Le procédé selon l'invention peut comporter une étape ultérieure à l'étape d) de retrait du poussoir chargé du gant usagé et de retrait de la bague du gant neuf du support.

### BRÈVE DESCRIPTION DES DESSINS

La présente invention sera mieux comprise à l'aide de la description qui va suivre et des dessins en annexe, sur lesquels :
- les figures 1A et 1B sont des vues en coupe d'un dispositif de changement de gant selon la présente invention,
- la figure 2 est une vue en coupe d'un gant selon la présente invention, apte à être changé par le dispositif de la figure 1,
- la figure 2A est une vue en coupe d'un gant neuf dans un poche de protection selon la présente invention,
- les figures 3A à 3I sont des vues en coupes des différentes étapes de changement d'un gant de la figure 2 avec un dispositif selon la figure 1;
- la figure 4 est une vue de détail de la figure 3I,
- la figure 5 est une vue de détail de la figure 3E,
- la figure 6 est une vue de détail de la figure 3F,
- les figures 7A et 7B sont des vues d'une variante de réalisation du premier mode de réalisation,
- la figure 8 est une vue en coupe d'un gant et de sa manchette selon un deuxième mode de réalisation,
- les figures 9A et 9B sont des vues de détail de la figure 8,
- les figures 10A à 10E sont des vues de détail des différentes étapes d'un changement de gant selon le deuxième mode de réalisation,
- la figure 11 est une vue en coupe partielle d'un obturateur provisoire en lieu et place d'un gant neuf.

### EXPOSÉ DÉTAILLÉ DE MODES DE RÉALISATION PARTICULIERS

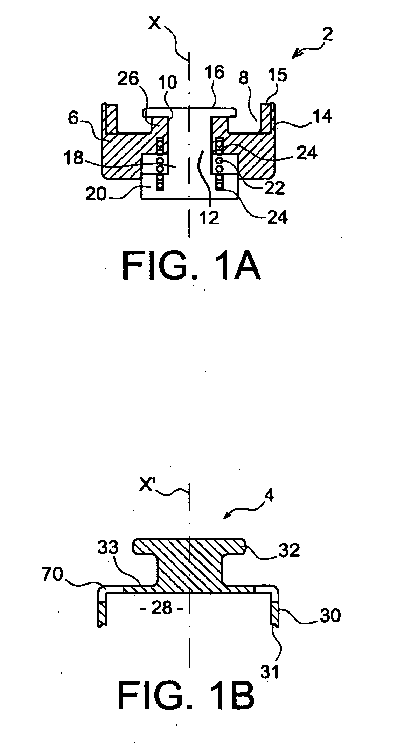

Sur la figure 1, on peut voir un dispositif de changement de gant selon la présente invention comportant un support 2 et un poussoir 4. Le support 2 et le poussoir 4 ont, dans l'exemple représenté, sensiblement une forme de révolution autour d'un axe X, X' respectivement.

Le support 2 comporte un corps 6 d'axe X dans lequel est pratiquée une cavité centrale 8 destinée à recevoir un gant neuf G, et un alésage 10 également d'axe X traversant de part en part le corps 6. Le support comporte également un piston 12 monté mobile dans l'alésage 10 et débouchant de part et d'autre du corps dans une direction axiale.

Le corps comporte une face d'extrémité annulaire 15 entourant la cavité et sensiblement perpendiculaire à l'axe de la cavité. La cavité a un diamètre intérieur sensiblement égal à celui d'un manchon de plus petit diamètre 40 d'une bague 36 d'un gant selon la présente invention, qui sera décrite par la suite.

Le piston 12 comporte à une première extrémité axiale 14 un applicateur formé par un disque 16 et à une deuxième extrémité 18 une embase 20. Le disque 16 et l'embase 20 ont avantageusement un diamètre extérieur supérieur au diamètre de l'alésage 10. Ainsi le piston 12 est empêché de s'échapper de l'alésage 10.

Le support comporte également un moyen de rappel, par exemple un ressort hélicoïdal 22 du piston en position repos.

Cette position repos est celle dans laquelle le disque est en appui contre un fond de la cavité 8 du corps 6.

Le ressort est monté en réaction entre le corps 6 et l'embase 20. De manière avantageuse, le corps 6 et l'embase 20 comportent respectivement des gorges annulaires 24 en regard pour recevoir les extrémités longitudinales du ressort 22, améliorant son maintien et son guidage.

Ainsi au repos, l'embase 20 est en saillie vers l'extérieur du corps 6 et le disque 16 est en appui contre le fond de la cavité 8.

Dans l'exemple représenté, le fond de la cavité 8 comporte une saillie circulaire 26 sensiblement au centre de la cavité 8, sur laquelle s'appuie au repos le disque. Cette saillie permet de réduire la course du piston lors du processus de remplacement du gant.

Dans l'exemple représenté, le gant est fixé à la bague 36 au moyen d'un collier 37 dont deux têtes diamétralement opposées sont visibles, des rainures 27 diamétralement opposées sont alors prévus dans la paroi intérieure de la cavité 8 pour permettre le passage de cette tête.

Le poussoir 4 comporte une cavité 28 d'axe longitudinal X', bordée par une paroi annulaire 30 munie d'une face d'extrémité 31 et un moyen de préhension 32 fixé à un fond 33 de la cavité 28, tel qu'une poignée en forme de disque pour déplacer le poussoir 4. La cavité a un diamètre intérieur sensiblement égal à celui du diamètre extérieur d'un manchon de plus grand diamètre 38 de la bague de gant 36.

La cavité 28 comporte également un moyen 35 pour retenir une bague de gant. Ce moyen peut être, par exemple formé par un téton en saillie de la paroi intérieure de la cavité 28 pour appliquer une contrainte de compression sensiblement radiale sur la bague et/ou un adhésif temporaire appliqué sur la même paroi.

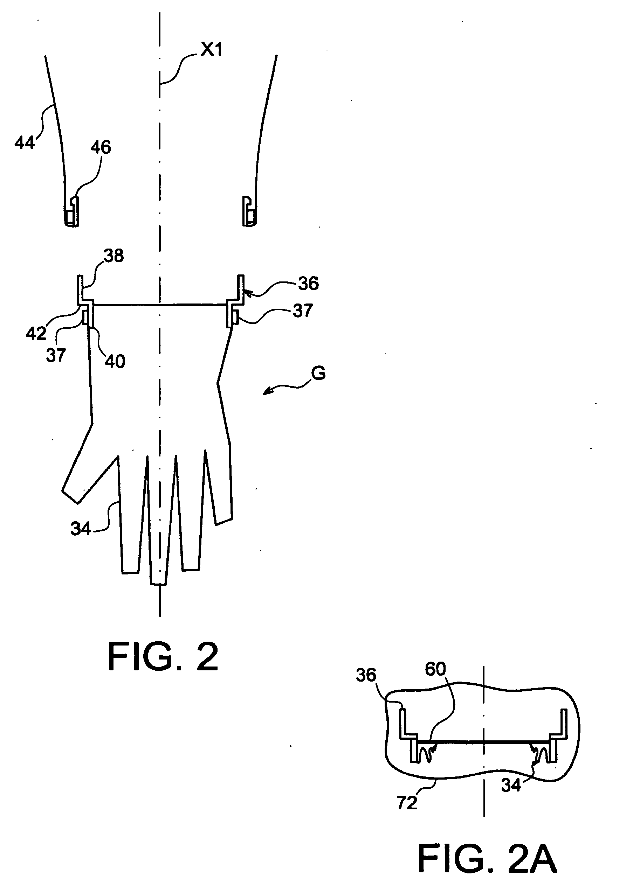

Un gant G (figure 2) selon la présente invention comporte un gant en matériau souple 34 ou partie de protection de la main et une bague annulaire 36 bordant l'ouverture du gant 34.

Dans la suite de la description, la référence 36 désigne la bague du gant neuf et la référence 136 désigne la bague du gant usagé. Les bagues 36 et 136 ont la même structure, et la description de la bague 36 s'applique à la bague 136.

La bague 36 d'axe X1 comporte, dans l'exemple de réalisation représenté, un premier manchon 38 de plus grand diamètre et un deuxième manchon 40 de plus petit diamètre raccordés par une portée annulaire 42. Le gant souple 34 est fixé au manchon de plus petit diamètre 40.

Cette configuration avec deux manchons 38, 40 améliore avantageusement la stabilité, assure un centrage de la bague 36 du gant neuf et la bague 136 du gant usagé et permet de réserver un volume pour laisser passer le collier 37, notamment la tête de collier ou tout autre moyen d'assemblage du gant 34 sur la bague 36.

On pourrait envisager également d'utiliser une bague formée par un seul manchon.

Le gant 34 est réalisé, par exemple en polyéthylène, en polyvinyle chlorure ou autre matériau compatible avec un confinement stérile, et les bagues 36, 136 sont avantageusement réalisées en matériau plastique, par exemple en polyéthylène.

On peut également prévoir de réaliser simultanément la bague et le gant par co-injection ou de surmouler la bague sur le gant. On peut également prévoir de venir fixer la bague sur le gant par exemple par collage ou thermo-soudage.

La solidarisation du gant et de la bague peut, comme décrit précédemment, être effectuée par une bague supplémentaire de clipsage ou d'encliquetage, ou par une bague thermo-rétractable. Le choix de l'assemblage tiendra compte de la compatibilité des matériaux.

Dans le mode de réalisation, le gant est destiné à venir se fixer à une manchette 44 formant un protection pour le bras, ainsi le manipulateur a plus de liberté pour effectuer son travail.

La manchette 44 est fixée par une première extrémité (non représentée) à une paroi d'une enceinte, en particulier, cette extrémité borde une ouverture pratiquée dans la paroi pour le passage du bras et comporte à une deuxième extrémité, une bague 46 destinée à coopérer avec la bague 36.

Dans l'exemple représenté, la bague 46 est fixée à l'intérieur de la manchette 44, elle peut être réalisée simultanément avec la manchette par moulage, de manière similaire à la réalisation du gant 34 et de la bague 36. Les matériaux de la manchette et de la bague peuvent également être les mêmes que ceux du gant 34 et de la bague 36.

On peut prévoir d'utiliser un matériau plus résistant pour la manchette, puisque dans l'exemple représenté, elle n'est pas destinée à être changée fréquemment.

Un gant G comportant une première partie de réception de la main et une deuxième partie de réception du bras réalisées d'un seul tenant, ne sort pas du cadre de la présente invention. La bague 36 est alors fixée à l'extrémité de la manchette et coopère avec une bague 46 fixée sur la paroi de l'enceinte.

De manière avantageuse, la bague 36 et la bague 46 coopèrent par encliquetage.

Selon la présente invention, les moyens de fixation de la bague 36 de gant sur la bague 46 de manchette sont solidaires de la bague 36 de gant, ce qui signifient, dans la présente demande, qu'ils font partie intégrante de la bague de gant 36 et ne sont pas destinés à être démontés pour permettre le montage de la bague 36 sur la bague 46.

Dans l'exemple représenté, ces moyens de fixation sont venus de matière avec la bague 36 de gant.

On pourrait prévoir de les rapporter par collage ou par tout autre moyen.

Les moyens de fixation du gant 34 sur la bague 46 sont solidaires de la bague 36 de manière suffisamment rigide, pour éviter qu'ils se séparent de la bague 36 lors d'une opération de transfert.

La bague 36 comporte une portée annulaire 48 sensiblement perpendiculaire à l'axe de la bague et formant butée de retenue.

La bague 46, quant à elle, comporte un épaulement 50 intérieur orienté en direction de la première extrémité de la manchette. Après emboîtement de la bague 36 de gant dans la bague 46 de manchette, la surface annulaire 48 est disposée en avant de l'épaulement 50 dans le sens d'insertion de la bague de gant 36 dans la bague de manchette 46 indiqué par la flèche 52.

Ainsi, le déplacement du gant dans le sens inverse de celui d'insertion, est limité par la surface 48 venant en butée contre l'épaulement 50.

La portée annulaire 48 a une face de forme tronconique orientée dans le sens d'insertion de la bague 36 dans la bague 46, facilitant l'insertion de la bague 36 dans la bague 46.

Le manchon 38 comporte également une butée arrière 56 portée par son extrémité longitudinale proche du manchon de plus petit diamètre 40, et destinée à venir en contact avec la face d'extrémité arrière 55 dans le sens 52 de la bague 46 de manchette. Ainsi la bague de gant 36 est empêchée de se déplacer dans le sens d'insertion au-delà d'une limite fixée par la butée arrière.

Cette butée 56 est formée, dans l'exemple représenté, par une face annulaire 58 radialement en saillie de la périphérie extérieure du manchon 38, sensiblement perpendiculaire à l'axe de la bague 36 de gant.

Dans l'exemple représenté, la distance séparant la portée annulaire 48 de la butée arrière 56 est prévue légèrement supérieure à la distance séparant l'épaulement 50 de la face d'extrémité arrière 55 de la bague 46 de manchette.

Si les dimensions du premier manchon le permettent, la butée arrière 56 peut ne pas être disposée à l'extrémité du premier manchon du côté de la portée annulaire 48.

La butée arrière 56 et la saillie tronconique 54 portant la surface 48 sont avantageusement réalisées d'un seul tenant par moulage avec la bague 36.

Il est également envisageable de réaliser les surfaces 48, 58 non continues.

L'accrochage du gant sur la manchette est donc très simple et très rapide. En outre, lors du montage l'opérateur ressent le passage de points durs formés par les moyens d'encliquetage, formant un indicateur de fin de fixation. L'opérateur est alors assurer d'avoir terminé le transfert de gant, et ne risque pas de retirer le poussoir avec le gant usagé avant le montage définitif et sûr du gant neuf sur la manchette.

L'accrochage du gant sur la manchette, et de manière général sur un élément solidaire du confinement peut également s'effectuer par d'autres moyens d'encliquetage, par exemple par au moins une languette élastique portée par la bague 36 de gant pénétrant dans un orifice de la bague 46 de manchette.

On peut même prévoir de réaliser la solidarisation du gant sur la manchette 44 par des moyens de frottement ; on peut envisager de prévoir des moyens provoquant un frottement très important entre la surface extérieure du premier manchon de la bague 36 de gant et la paroi intérieure de la bague 46 de manchette; ces frottements étant suffisamment importants pour maintenir le gant et la manchette solidaires lors d'un usage normal et insuffisant pour empêcher le glissement de la bague de gant par rapport à la bague de manchette par application d'un effort déterminé.

Dans l'exemple représenté, la bague 36 de gant est introduite dans la bague de manchette 46, mais on peut prévoir d'introduire la bague de manchette 46 dans la bague de gant 36.

La bague 46 comporte une face d'extrémité avant 62 dans le sens d'insertion 52, destinée à coopérer avec la face d'extrémité 31 du poussoir. De manière avantageuse, les faces 31 et 62 comportent des moyens de centrage de l'une par rapport à l'autre. Ces moyens de centrage sont formés, dans l'exemple représenté, par un partie centrale 64 sensiblement perpendiculaire à l'axe de la bague 46 et une partie extérieure 66 sensiblement tronconique portées par la face 62 et des surfaces de forme correspondante portées par la face 31 du poussoir.

De plus ces formes particulières assurent le maintien latéral du poussoir relativement à la bague 46, évitant ainsi tout glissement latéral du poussoir par rapport à la bague 46, lorsqu'une poussée est exercée sur le poussoir en direction de la bague 46.

On peut prévoir de disposer la partie tronconique à l'intérieur et la surface perpendiculaire à l'extérieur.

De manière avantageuse, le gant neuf G comporte un couvercle 60 destiné, dans un premier temps, à protéger l'intérieur du gant des pollutions extérieures. Le couvercle 60 est disposé dans la bague 36. Le couvercle a un diamètre extérieur légèrement supérieur au diamètre intérieur du deuxième manchon 40 pour permettre son montage à force dans le deuxième manchon 40. Dans un deuxième temps, ce couvercle sert à isoler le gant neuf du gant usagé, et à enfermer la partie souple du gant usagé à l'intérieur de sa bague.

On peut prévoir de disposer un adhésif sur le couvercle et/ou sur la bague pour améliorer le maintien du couvercle dans la bague 36. Cet adhésif est avantageusement à adhérence modérée pour éviter d'augmenter l'effort de transfert du couvercle 60, et pour conserver une répétitivité de l'effort, puisque celui-ci est lié à la calibration du ressort 22 de l'outil.

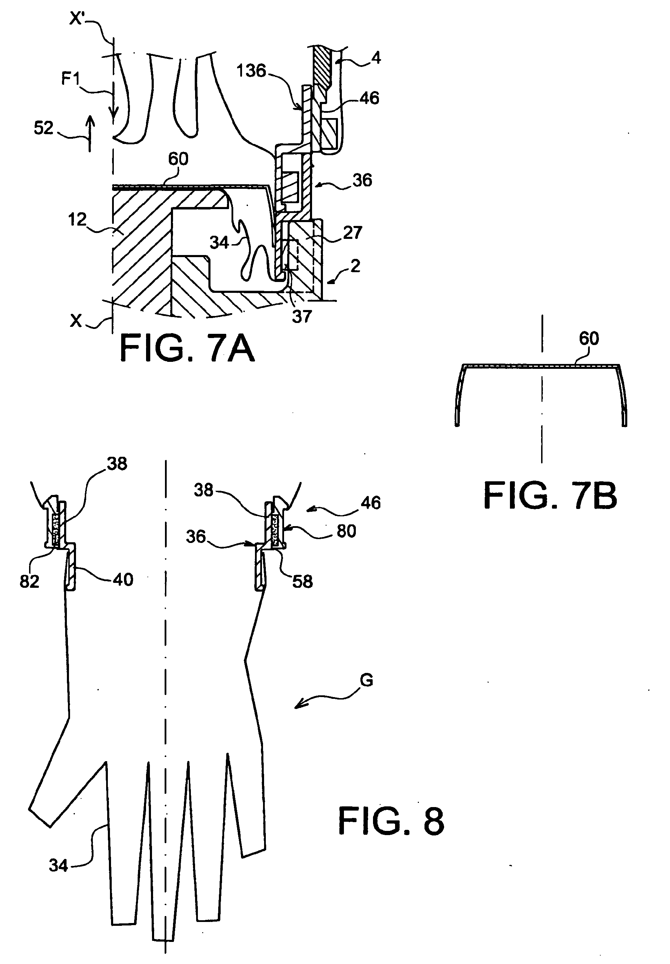

On peut alors prévoir un couvercle de forme tronconique permettant une adhérence suffisante avec l'intérieur du manchon 40, tel que cela est représenté sur les figures 7A et 7B.

La figure 7a représente le gant en cours de phase de transfert du couvercle 60.

Cette variante de réalisation permet avantageusement un meilleur centrage entre les bagues 36, 136 et l'outil 12.

Ce couvercle est, par exemple réalisé en matériau plastique par moulage.

De manière avantageuse, le gant G selon la présente invention est fourni avec un couvercle 60 monté dans la bague 36 et enfermé dans une poche 72 sellée de manière à le protéger des contaminations extérieures (figure 2A).

On pourrait cependant prévoir de placer le couvercle juste avant le changement de gant.

Un avantage du gant muni d'un couvercle, comme il le sera détaillé par la suite, est d'isoler la surface extérieure du gant usagé qui peut être souillée par des particules dangereuses, de l'intérieur du gant qui reçoit la main du manipulateur.

Cependant, dans le cas où les produits manipulés ne sont pas dangereux, où l'on recherche à travailler dans une atmosphère protégée des pollutions extérieures, l'isolement de la surface extérieure du gant usagée de la surface intérieure du gant neuf n'est pas nécessaire. On peut alors prévoir de monter des gants sans couvercle. Dans ce cas, le support 2 de montage peut ne pas comporter de piston 12 de transfert du couvercle 60 du gant neuf vers gant usagé.

Sur les figures 8 à 11, on peut voir un mode de réalisation particulièrement adapté aux milieux stériles, pour lesquels on cherche à respecter la continuité de stérilité dans un milieu confiné.

Les mêmes références que celles utilisées pour la description du premier mode de réalisation seront utilisées pour décrite les éléments remplissant les mêmes fonctions.

Dans ce mode de réalisation, il est alors prévu des moyens d'étanchéité 80 entre la bague 36 de gant et la bague 46 de manchette.

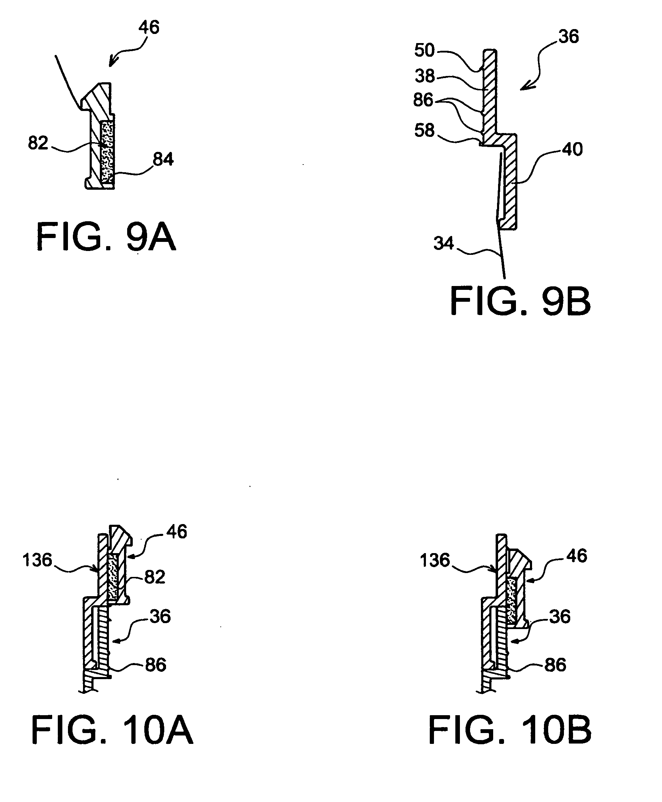

Dans l'exemple représenté, les moyens d'étanchéité 80 comportent une bague 82 (figure 9A) en élastomère souple portée par la bague 46 et disposée dans une gorge 84 de la paroi intérieure de la bague 46 et des bourrelets annulaires 86 représentés sur la figure 9B en saillie de la paroi extérieure du manchon 38 de la bague 36 et destinés à venir en contact avec la bague souple 82.

Le diamètre extérieur des bourrelets 86 est légèrement supérieur au diamètre intérieur de la bague 82 pour mettre le matériau élastomère en compression et confirmer l'étanchéité.

Lors du montage du gant sur la manchette 44, les bourrelets 86 viennent en contact avec la bague 82 et comprime celle-ci assurant une étanchéité de l'assemblage entre la bague 36 et la bague 46.

On peut envisager de disposer la bague 82 sur le gant et les bourrelets sur la bague 46 de manchette.

On peut également envisager de se passer de la bague 82 en utilisant des matériaux aptes à offrir au moins localement une souplesse suffisante pour assurer l'étanchéité.

De manière avantageuse, il est prévu des moyens d'orientation angulaire des gants par rapport à la manchette 44 afin d'assurer une orientation correcte des doigts. En effet, les moyens d'étanchéité 80 limitent le déplacement angulaire du gant par rapport à la manchette, rendant alors difficile une modification de la position du gant.

Pour cela on peut prévoir un marquage visuel sur les bagues 36 et 46 pour assurer une bonne indexation angulaire, qui n'a toutefois pas besoin d'être trop précise.

Un marquage peut également être prévu entre le gant et la bague 36.

Le gant, selon le deuxième mode de réalisation, permet son usage dans le domaine pharmaceutique ou dans d'autres domaines nécessitant des confinements stériles

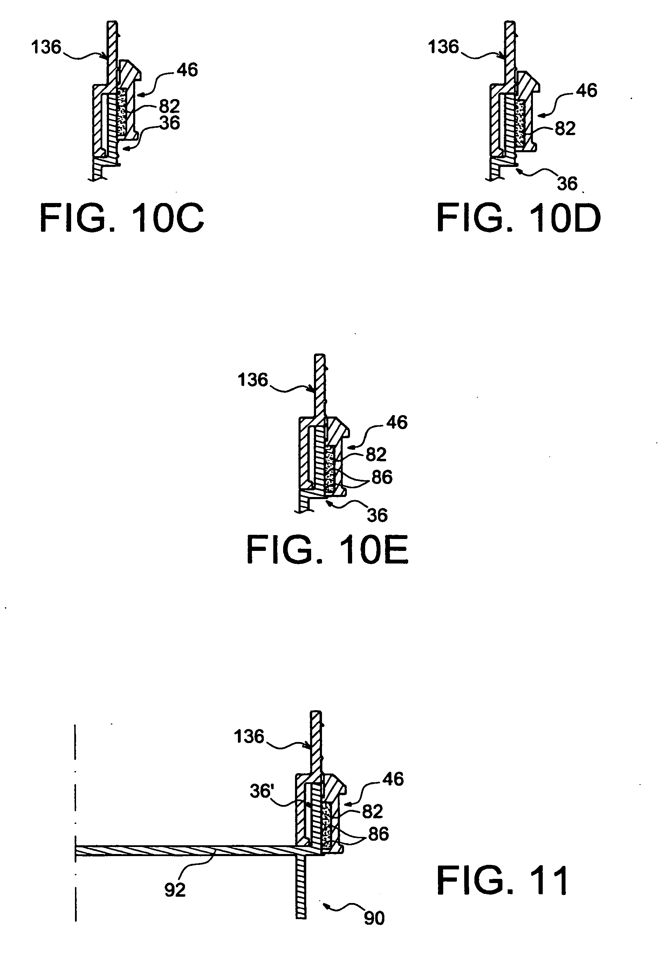

Sur la figure 11, est représenté un obturateur 90 monté en lieu et place d'un gant neuf, par exemple lors de la stérilisation initiale du confinement, lors de la rupture du stock de gants neufs ou lorsque le gant est détérioré et dans les cas d'urgence. Un gant reste alors en place sur la manchette pour permettre d'assurer le transfert ultérieur avec un gant neuf. Cet obturateur 90 comporte une bague 36' extérieure dont le passage central est fermé par une paroi transversale 92. Sa mise en place est similaire à la mise en place d'un gant neuf, et ne sera pas décrite.

Dans une variante de réalisation, l'outil 12 peut comporter des moyens aptes à générer un transfert des bagues 36, 136 sans que l'opérateur ait besoin de doser l'effort manuel de poussée pour cette opération. Ainsi un risque d'une opération non complète est éliminé. Ceci est particulièrement intéressant dans le deuxième mode de réalisation, puisqu'il assure que l'étanchéité sera bien maintenue.

Ces moyens peuvent être du type à réarmement avec un ressort chargé et apte à libérer sa charge lors du transfert.

Nous allons maintenant expliquer le procédé de changement de gant selon la présente invention, ce procédé est identique pour les deux modes de réalisation.

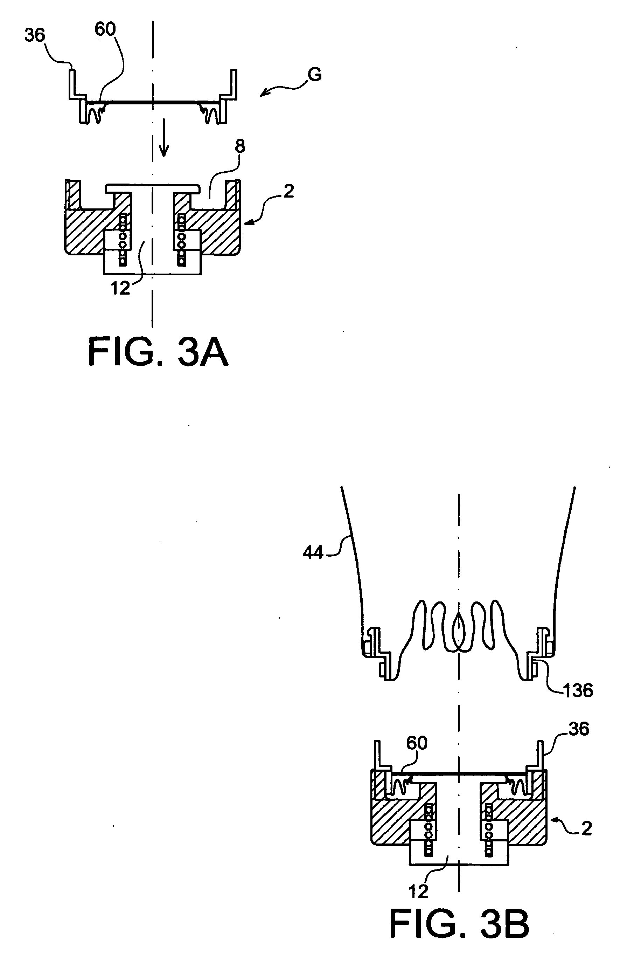

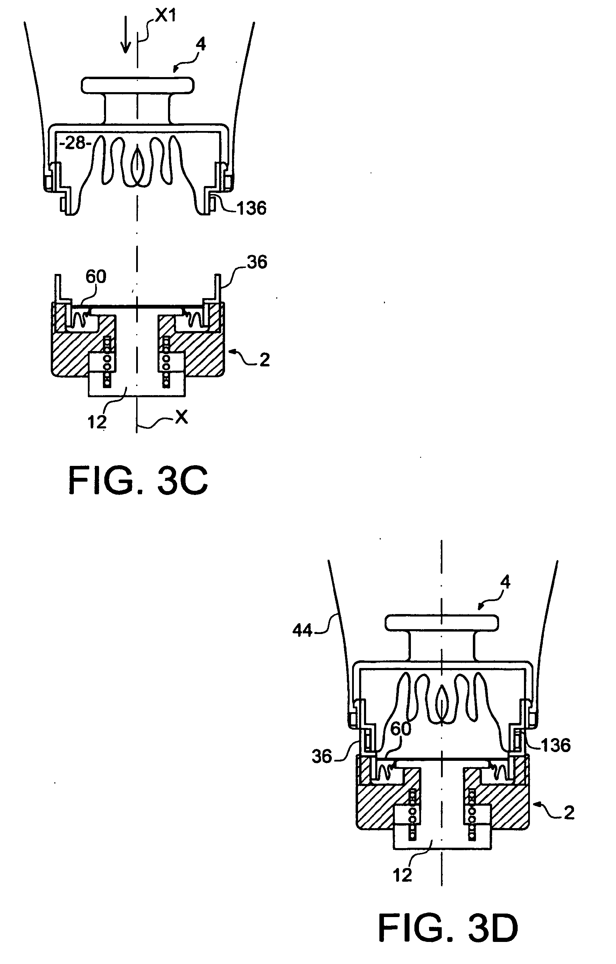

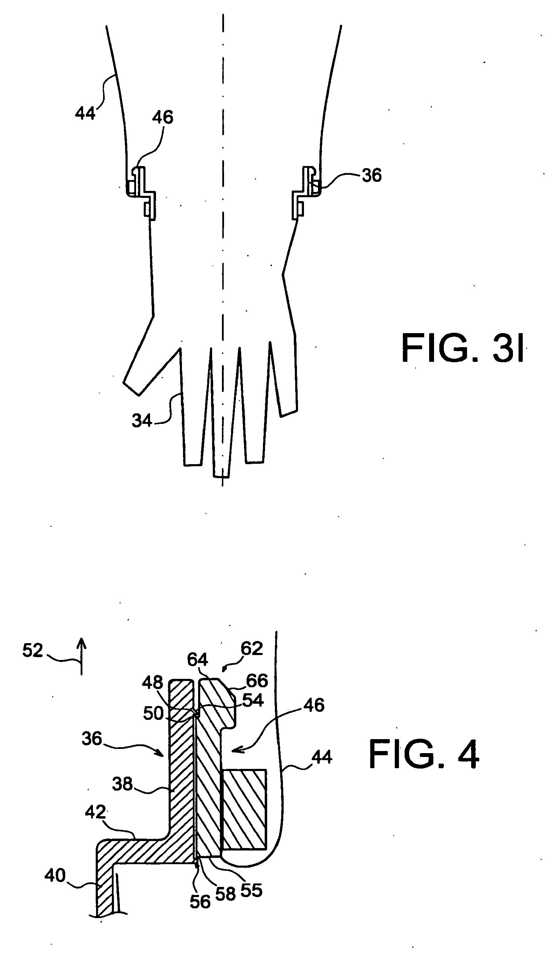

La description se fera à l'aide des figures 3A à 3I du premier mode de réalisation.

Le procédé de changement de gant comporte les étapes suivantes
a) de mise en place d'un gant neuf dans la cavité du support,
b) de mise en place du poussoir en appui sur la bague de l'enceinte à laquelle est fixé le gant usagé,
c) de mise en place de la bague du gant usagé dans la bague du gant neuf,
d) de transfert du gant usagé de la bague de l'enceinte à la cavité du poussoir et de transfert simultané de la bague du gant neuf de la cavité du poussoir à la bague de l'enceinte.

Nous allons détailler dans la suite de la description les différentes étapes du procédé de changement de gant selon la présente invention.

Les références désignant les éléments du gant usagé reprennent les références désignant les mêmes éléments du gant neuf augmentées de 100.

Le support est disposé dans l'enceinte de confinement, il peut y rester en permanence. Au moins une poche stérile contenant au moins un gant neuf G est également introduite dans l'enceinte. Le poussoir 2 est, quant à lui stocké à l'extérieur de l'enceinte ; le poussoir n'est pas en contact avec le gant neuf et est uniquement en contact avec le gant usagé.

Sur la figure 3A, lors de l'étape a) on peut voir la mise en place d'un gant neuf G selon la présente invention sur un support 2, après retrait de la poche 72. La bague 36 est introduire dans la cavité 8 par son manchon de plus petit diamètre 40, l'épaulement étant alors en appui sur la face d'extrémité 15. Le couvercle 60 repose sur le disque du piston, le gant neuf 34 est alors confiné entre le couvercle 60 et le fond de la cavité 8, les axes X et X1 sont alors sensiblement alignés.

Le gant usagé est ensuite avantageusement retroussé (figure 3B), c'est-à-dire que les parties destinées à recouvrir les doigts sont retournées vers l'intérieur du gant. Ce retournement peut s'effectuer simplement lorsque l'utilisateur retire sa main, sans requérir de manipulation supplémentaire.

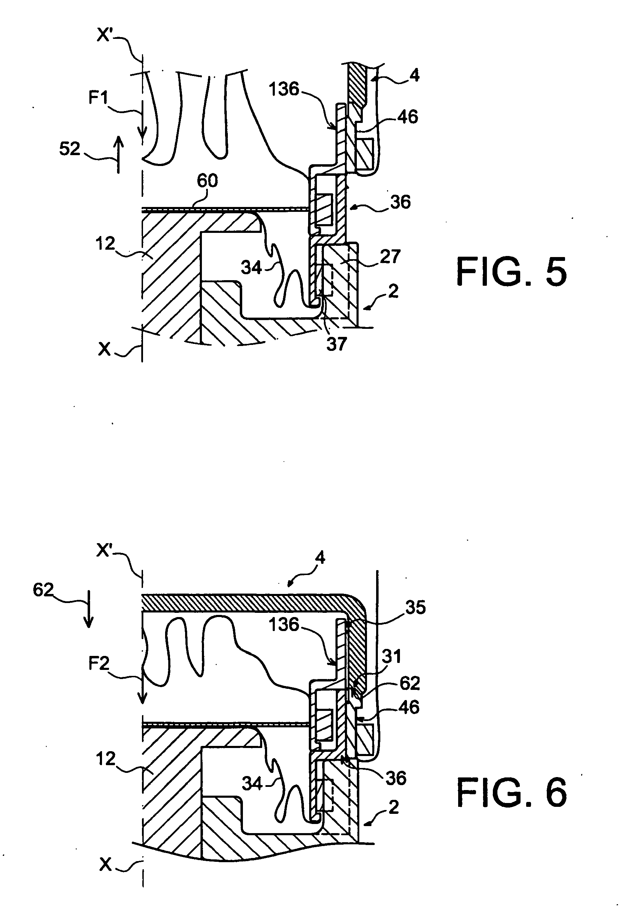

Lors de l'étape b), le poussoir 4 est mis en place à l'intérieur de la manchette 44 par l'extérieur de l'enceinte, de telle sorte que la paroi d'extrémité annulaire 33 du poussoir 4 vient en appui contre la face d'extrémité 162 de la bague 46 de la manchette, laissant libre l'extrémité de la bague 136 du gant usagé, orientée vers l'intérieur du poussoir (Figure 5).

Lors de l'étape c), La bague 136 du gant usagé est placée dans la bague 36 du gant neuf, en particulier le deuxième manchon 140 de la bague 136 du gant usagé est placé dans le premier manchon 38 de la bague du gant neuf, de manière à aligner les axes X et X'.

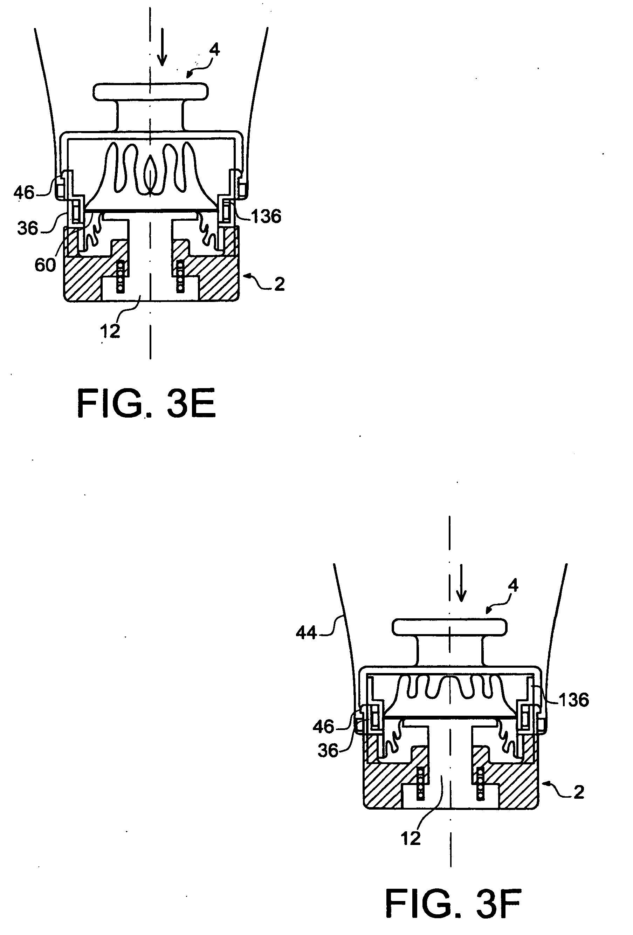

Lors de l'étape d) (figure 3E et 5), un premier effort F1 de poussée est exercé sur la poussoir 4, notamment sur la poignée 32 dans le sens 68, provoquant le déplacement du corps relativement au piston à l'encontre du ressort 22, l'applicateur 16 vient alors en saillie du fond de la cavité 8 et déplace le couvercle 60, celui-ci coulisse dans le deuxième manchon 40 de la bague 36, puis dans le deuxième manchon 140 de la bague 136 du gant usagé. Le couvercle 60 est alors maintenu à force dans le deuxième manchon 140.

Un deuxième effort F2 d'intensité supérieure à celle de F1 est appliqué au poussoir dans le sens 68 provoquant le coulissement des premiers manchons 38,138 (Figure 6, 3F), le manchon 138 se retrouve alors dans la cavité 28 du poussoir et le manchon 38 se retrouve dans la bague 46.

La butée arrière se décroche de la face arrière 55 de la bague 46 par l'application de l'effort de poussée F2, libérant le manchon de la bague 46.

Le manchon 38 a alors une position suffisamment avancée pour permettre un encliquetage de la bague 36 sur la bague 46.

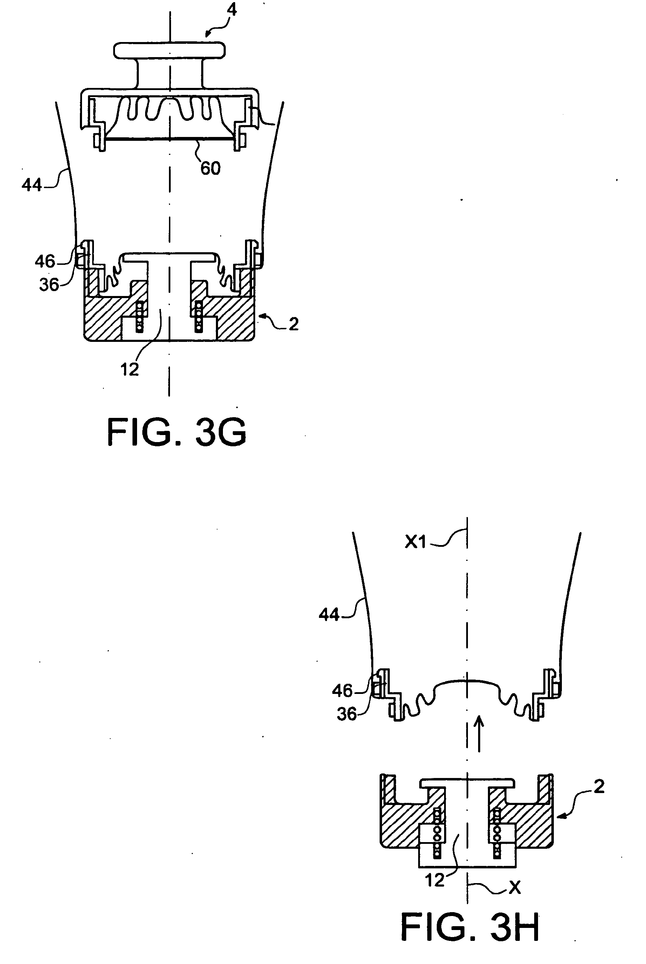

Le poussoir est ensuite retiré (figure 3G) emportant avec lui le gant usagé enfermé dans sa bague 136 par le couvercle 60 et maintenu dans la cavité du poussoir.

Le piston 12 est rappelé en position de repos par le ressort 22 et le manchon muni du gant neuf est retiré du support 2, le gant neuf est alors utilisable (figure 3H).

Le gant usagé est retiré du poussoir, par exemple en exerçant une poussée sur le couvercle 60 à l'aide d'un outil adapté, à travers au moins un orifice 70 pratiqué dans le fond de la cavité 28 du poussoir et permettant d'accéder à la cavité par l'extérieur.

Ainsi, aucun contact entre le gant usagé, notamment avec la surface extérieure du gant en contact avec des objets manipulés dans l'enceinte, et l'environnement extérieur n'a lieu. Il n'y a également aucun contact avec le poussoir, celui-ci n'a donc pas besoin d'être nettoyé après utilisation.

Le gant usagé ainsi que le couvercle peuvent être stockées pour recyclage ou destruction.

Dans le cas où le gant neuf ne comporte par de couvercle, le changement de gant s'effectue comme précédemment, il n'est pas nécessaire d'appliquer le premier effort F1. En outre, pour le retrait du gant usagé du poussoir, il suffit d'exercer une traction sur la bague 136 du gant usagé pour le sortir de la cavité du poussoir.

Sur les figures 10A à 10E, on peut voir les différentes étapes d'un changement de gant selon le deuxième mode de réalisation, seuls les bagues 36 des gants et la bague 46 de la manchette sont représentées.

Sur la figure 10A, le gant usagé est en place dans la bague, le gant neuf est en attente.

Sur les figures 10B à 10D, le transfert a progressivement lieu, la bague 36 du gant usagé est éjectée de la bague 46.

Sur la figure 10E, le changement de gant est terminé, la bague 36 du gant neuf est montée dans la bague 46 de la manchette 44, le gant usagé est prêt à être retiré.

La présente invention permet d'effectuer un changement de gant d'un type simple, de manière sûre et rapide.

## Revendications

1. Dispositif de changement d'un gant de manipulation dans des espaces confinés, ledit dispositif étant destiné à remplacer un gant usagé par un gant neuf, chaque gant comportant une partie de réception de la main (34) en matériau souple et une bague de gant (36) d'axe longitudinal (X1) bordant une ouverture du gant pour l'introduction de la main, ladite bague de gant (36) comportant également des moyens de fixation à un élément fixé à une enceinte de confinement, ledit élément comportant une bague (46), dite bague de l'élément, de diamètre sensiblement égal au diamètre extérieur d'un premier manchon (38) de la bague de gant (36) et comportant des moyens de fixation pour coopérer avec les moyens de fixation que comporte ladite bague de gant (36), lesdits moyens de fixation étant aptes à être verrouillés et déverrouillés par application d'un effort sensiblement axial, lesdits moyens de fixation que comporte ladite bague (46) de l'élément étant solidaires de ladite bague (46) de l'élément, le dispositif comportant un support (2) muni d'une cavité (8) pour recevoir un gant neuf, un poussoir (4) muni d'une cavité (28) pour recevoir un gant usagé et de moyens pour transférer le gant neuf du support (2) à l'élément de l'enceinte en lieu et place du gant usagé et transférer le gant usagé de l'élément de l'enceinte au poussoir (4).

2. Dispositif de changement de gant selon la revendication 1, dans lequel la bague de gant (36) comporte un deuxième manchon (40) de plus petit diamètre que le diamètre du premier manchon (38), les deux manchons étant raccordés par une portée annulaire (42), et dans lequel la cavité (8) du support est de diamètre sensiblement égal au diamètre extérieur de deuxième manchon (40) de la bague (36) de gant.

3. Dispositif selon la revendication précédente, dans lequel la cavité (28) du poussoir (4) est de diamètre sensiblement égal au diamètre extérieur du premier manchon (38) de la bague de gant.

4. Dispositif selon l'une quelconque des revendications 1 à 3, dans lequel le poussoir (4) comporte une surface de poussée (31) destinée à venir en appui sur une face d'extrémité (62) de la bague de l'élément (46), ladite surface de poussée comportant une forme complémentaire à celle de la face d'extrémité (62) de la bague (46) de l'élément.

5. Dispositif selon l'une quelconque des revendications 1 à 4, dans lequel la cavité (28) du poussoir (4) comporte un moyen de retenue (35) de la bague de gant.

6. Dispositif selon l'une quelconque des revendications 1 à 5, comportant des moyens d'assistance au changement de gant de manière à assurer l'application d'une charge constante sur la bague du gant neuf, afin d'assurer un montage adéquate.

7. Dispositif selon l'une des revendications 1 à 6, dans lequel le support (2) comporte un corps (6) et un piston (12) mobile axialement dans un alésage axial du corps (6), ledit piston étant destiné à transférer un couvercle de protection du gant neuf vis-à-vis du gant usagé, de la bague du gant neuf à la bague (36) du gant usagé, ledit piston (12) étant maintenu en position repos par un moyen de rappel (22) pour permettre la mise en place du gant neuf dans la cavité du support.

8. Dispositif selon la revendication précédente, dans lequel le piston (12) peut coulisser dans le corps entre une première position dans laquelle le piston est en saillie d'un fond extérieur du corps (6) opposé à la cavité, et une deuxième position dans laquelle le piston (12) est en saillie du fond de la cavité (8).

9. Dispositif selon la revendication 7 ou 8, dans lequel le piston (12) comporte une embase (20) du côté opposé à la cavité du corps et un disque (16) dans la cavité destiné à venir en contact avec un couvercle (60) de protection.

10. Dispositif selon la revendication 9, dans lequel le moyen de rappel (22) est formé par un ressort interposé entre l'embase (20) et le corps (6) du support.

11. Système de changement de gant comportant un dispositif de changement de gant selon l'une des revendications 7 à 10 et au moins un couvercle de protection (60), ledit couvercle étant destiné à être monté dans la bague du gant neuf avant le changement de gant.

12. Procédé de changement d'un gant mettant en oeuvre un dispositif selon l'une des revendications 1 à 11, comportant les étapes suivantes
a) de mise en place d'un gant neuf dans la cavité (8) du support (2),
b) de mise en place du poussoir (4) en appui sur la bague (46) de l'élément dans laquelle est fixé le gant usagé,
c) de mise en place de la bague (36) du gant usagé dans la bague du gant neuf,
d) de transfert du gant usagé de la bague (46) de l'élément à la cavité (28) du poussoir (4) et de transfert simultané de la bague (36) du gant neuf de la cavité (8) du support (2) à la bague (46) de l'élément, par application d'un effort sur le poussoir (4) in direction du support (2).

13. Procédé selon la revendication précédente, comportant une étape préalable à l'étape a), de mise en place dans l'enceinte d'au moins un gant neuf et du support.

14. Procédé selon la revendication 12 ou 13, comportant une étape préalable à l'étape b) de retournement du gant usagé.

15. Procédé selon l'une des revendications 12 à 14 mettant en oeuvre un système de changement de gant selon la revendication 11 comportant une étape préalable à l'étape a) de mise en place d'un couvercle de protection dans la bague (36) du gant neuf

16. Procédé selon la revendication précédente, comportant une étape préalable à l'étape d) de transfert du couvercle de la bague du gant neuf à la bague du gant usagé par application d'un effort de première intensité (F1) de poussée sur le poussoir en direction du support.

17. Procédé selon la revendication précédente, dans lequel lors de l'étape d), le transfert s'effectue par application d'un effort de deuxième intensité (F2) supérieure à la première intensité (F1) sur le poussoir en direction du support, pour transférer la bague du gant neuf du support à la bague de l'élément et transférer la bague du gant usagé de la bague de l'élément au poussoir.

18. Procédé selon l'une quelconque des revendications 12 à 17, comportant une étape ultérieure à l'étape d) de retrait du poussoir chargé du gant usagé et de retrait de la bague du gant neuf du support.

## Claims

1. A device to change a glove for manipulation in confined spaces, said device being designed to replace a used glove by a new glove, each glove including a part to receive the hand (34) in a flexible material, and a ring (36) on a longitudinal axis (X1) around an opening in the glove for insertion of the hand, said ring (36) also having means for attachment to an element fixed to a containment enclosure, said element including a ring (46), called ring of the element, with a diameter that is substantially equal to the outside diameter of a first sleeve (38) of the glove ring (36) and including attachment means to mate with the attachment means which are comprised by said glove ring (36) of the glove, said attachment means being designed to be locked and unlocked by application of a substantially axial force, and said attachment means which are comprised by said ring (46) of the element, being attached to said ring (46), wherein the device includes a support (2) that has a cavity (8) to receive a new glove, a push device (4) that has a cavity (28) to receive a used glove, and means to transfer the new glove from the support (2) to the enclosure taking the place of the used glove, and to transfer the used glove from the enclosure to the push device (4).

2. The device according to claim 1, wherein the glove ring (36) comprises a second sleeve (40) of smaller diameter than the diameter of the first sleeve (38), said sleeves being connected by an annular face (42), and wherein the cavity (28) of the support has a diameter that is substantially equal to the outside diameter of the second sleeve (40) of glove ring (36).

3. The device according to preceding claim, wherein the cavity (28) of the push device (4) has a diameter that is substantially equal to the outside diameter of the first sleeve (38) of the glove ring.

4. The device according to any one of claims 1 to 3, wherein the push device (4) includes a push area (31) that is intended to bear against the end face (62) of the ring (46) of the fixing element, where said push area has a shape that is complementary to that of the end face (62) of the ring (46) of the element.

5. The device according to any one of claims 1 to 4, wherein the cavity (28) of the push device (4) includes a means (35) for the retention of a glove ring.

6. The device according to any one of claims 1 to 5, including means for assisting with the glove change so as to ensure application of a constant load on the ring of the new glove, in order to guarantee correct fitting.

7. The device according to any one of claims 1 to 6 wherein the support (2) includes a body (6) and a piston (12) that is mobile axially in an axial bore in the body (6), said piston being intended to transfer a protection cap the new glove from the used glove, from the ring of new glove to the ring of used glove, with said piston (12) being maintained in a rest position by a return means (22) to allow positioning of the new glove in the cavity of the support.

8. The device according to preceding claim, wherein the piston (12) can slide in the body between a first position in which the piston is projecting from an outer end of the body (6) opposite to the cavity, and a second position in which the piston (12) is projecting from the bottom of the cavity (8).

9. The device according to claim 7 or 8, wherein the piston (12) includes a base (20) on the side opposite to the cavity of the body and a disk (16) in the cavity that is intended to come into contact with the protection cap (60).

10. The device according to claim 9, wherein the return means (22) are formed by a spring positioned between the base (20) and the body (6) of the support.

11. A system to change a glove comprising a device to change a glove according to any one of claims 7 to 10 and at least one protection cap (60), said protection cap (60) being intended to be mounted in a ring of a new glove before glove change.

12. A method to change a glove in using a device according to any of claims 1 to 11, including the following steps
a) positioning a new glove in the cavity (8) of the support (2),
b) positioning the push device (4) bearing onto the ring (46) of the enclosure to which the used glove is attached,
c) positioning the ring (36) of the used glove inside the ring of the new glove,
d) transferring the used glove from the ring of the element (46) to the cavity (28) of the push device (4) and simultaneous transferring of the ring (36) of the new glove from the cavity (8) of the support (2) to the ring (46) of the element, by applying a force from the push device (4) to the support (2).

13. The method according to the preceding claim, including a step prior to step a), for positioning, in the enclosure, of at least one new glove and of the support.

14. The method according to claim 12 or 13, including a step prior to step b) for turning the used glove.

15. The method according to any one of claims 12 to 14, using a system to change a glove according to claim 11 comprising a step prior to step a) for positioning a protection cap in the ring of the new glove.

16. The method according to preceding claim, including a step prior to step d) for transferring the cap of the ring of the new glove to the ring of the used glove, by the application of a push force of first intensity (F1) to the push device in the direction of the support.

17. The method according to preceding claim, wherein during step d), the transfer is effected by the application of a force of a second intensity (F2), that is greater than the first intensity, to the push device, in the direction of the support to transfer the ring of the new glove from the support to the ring of the element and to transfer the ring of the used glove from the ring of the element to the push device.

18. The method according to any one of claims 12 to 17, including a step following step d) for removal of the push device, loaded with the used glove, and for removal of the ring of the new glove from the support.

## Patentansprüche

1. Vorrichtung zum Auswechseln eines Handschuhs zur Handhabung in Sicherheitsräumen, wobei diese Vorrichtung dazu bestimmt ist, einen gebrauchten Handschuh durch einen neuen Handschuh zu ersetzen, wobei jeder Handschuh einen Teil zur Aufnahme der Hand (34) aus biegsame Werkstoff sowie einen Handschuhring (36) mit Längsachse (X1) umfasst, welcher eine Öffnung des Handschuhs zum Einführen der Hand umschließt, wobei dieser Handschuhring (36) ferner Mittel zur Befestigung an einem Element aufweist, das an einem Sicherheitsraum befestigt ist, wobei dieses Element einen Ring (46) aufweist, Elementring genannt, dessen Durchmesser im Wesentlichen gleich dem Außendurchmesser einer ersten Verbindungsmuffe (38) des Handschuhrings (36) ist und der Befestigungsmittel aufweist, die mit den Befestigungsmitteln zusammenwirken, die dieser Handschuhring (36) aufweist, wobei diese Befestigungsmittel durch Anwendung einer im Wesentlichen axialen Kraft miteinander verriegelt und entriegelt werden können, wobei diese Befestigungsmittel, die dieser Elementring (46) aufweist, mit diesem Ring (46) des Elements fest verbunden sind, wobei die Vorrichtung eine Halterung (2) umfasst, die einen Hohlraum (8) aufweist, um einen neuen Handschuh aufzunehmen, sowie ein Schubelement (4) umfasst, das einen Hohlraum (28) aufweist, um einen gebrauchten Handschuh aufzunehmen, und Mittel aufweist, um den neuen Handschuh von der Halterung (2) zu dem Element des Sicherheitsraums zu transferieren, und zwar an Ort und Stelle des gebrauchten Handschuhs, und den gebrauchten Handschuh von dem Element des Sicherheitsraums zu dem Schubelement (4) zu transferieren.

2. Vorrichtung zum Auswechseln eines Handschuhs nach Anspruch 1, wobei der Handschuhring (36) eine zweite Verbindungsmuffe (40) mit einem kleineren Durchmesser als der der ersten Verbindungsmuffe (38) aufweist, wobei die beiden Verbindungsmuffen durch einen ringförmigen Flächenbereich (42) miteinander verbunden sind, and wobei der Hohlraum (8) der Halterung einen Durchmesser hat, der im Wesentlichen gleich dem Außendurchmesser der zweiten Verbindungsmuffe (40) des Handschuhrings (36) ist.

3. Vorrichtung nach dem vorherigen Anspruch, wobei der Hohlraum (28) des Schubelements (4) einen Durchmesser hat, der im Wesentlichen gleich dem Außendurchmesser der ersten Verbindungsmuffe (38) des Handschuhrings ist.

4. Vorrichtung nach einem der Ansprüche 1 bis 3, wobei das Schubelement (4) eine Schubfläche (31) aufweist, die dazu bestimmt ist, in Anlage an einer Endfläche (62) des Rings (46) des Elements zu kommen, wobei diese Schubfläche eine Form hat, die komplementär zu der der Endfläche (62) des Rings (46) des Elements ist.

5. Vorrichtung nach einem der Ansprüche 1 bis 4, wobei der Hohlraum (28) des Schubelements (4) ein Rückhaltemittel (35) für den Handschuhring aufweist.

6. Vorrichtung nach einem der Ansprüche 1 bis 5, welche Mittel zur Unterstützung des Auswechselns eines Handschuhs dergestalt aufweist, dass die Ausübung einer konstanten Last auf den Ring des neuen Handschuhs gewährleistet ist, um eine angemessene Montage zu gewährleisten.

7. Vorrichtung nach einem der Ansprüche 1 bis 6, wobei die Halterung (2) einen Körper (6) und einen axial in einer axialen Bohrung des Körpers (6) bewegbaren Kolben (12) aufweist, wobei dieser Kolben dazu bestimmt ist, einen Schutzdeckel des neuen Handschuhs gegenüber dem gebrauchten Handschuh von dem Ring des neuen Handschuhs auf den Ring (36) des gebrauchten Handschuhs zu transferieren, wobei dieser Kolben (12) durch ein Rückstellmittel (22) in Ruhestellung gehalten wird, um die Anbringung des neuen Handschuhs in dem Hohlraum der Halterung zu ermöglichen.

8. Vorrichtung nach dem der vorherigen Anspruch, wobei der Kolben (12) in dem Körper zwischen einer ersten Position, in der der Kolben von einem Boden außerhalb des Körpers (6) auf der von dem Hohlraum abgewandten Seite hervorsteht, und einer zweiten Position, in der der Kolben (12) von dem Boden des Hohlraums (8) hervorsteht, gleiten kann.

9. Vorrichtung nach Anspruch 7 oder 8, wobei der Kolben (12) auf der von dem Hohlraum des Körpers abgewandten Seite einen Sockel (20) aufweist, sowie eine Scheibe (16) in dem Hohlraum, die dazu bestimmt ist, in Berührung mit einem Schutzdeckel (60) zu kommen.

10. Vorrichtung nach Anspruch 9, wobei das Rückstellmittel (22) von einer Feder gebildet wird, die zwischen dem Sockel (20) und dem Körper (6) der Halterung angeordnet ist.

11. System zum Auswechseln eines Handschuhs, das eine Vorrichtung zum Auswechseln eines Handschuhs nach einem der Ansprüche 7 bis 10 und mindestens einen Schutzdeckel (60) aufweist, wobei dieser Schutzdeckel dazu bestimmt ist, vor dem Auswechseln des Handschuhs in den Handschuhring eingebaut zu werden.

12. Verfahren zum Auswechseln eines Handschuhs, bei dem eine Vorrichtung nach einem der Ansprüche 1 bis 11 zum Einsatz kommt, und das die folgenden Verfahrensschritte beinhaltet:
a) des Einbringens eines neuen Handschuhs in den Hohlraum (8) der Halterung (2),
b) des Platzierens des Schubelements (4) in Anlage an dem Ring (46) des Elements, in dem der gebrauchte Handschuh befestigt ist,
c) des Platzierens des Rings (36) des gebrauchten Handschuhs in dem Ring des neuen Handschuhs,
d) des Überführens des gebrauchten Handschuhs von dem Ring (46) des Elements zu dem Hohlraum (28) des Schubelements (4) und des gleichzeitigen Überführens des Rings (36) des neuen Handschuhs von dem Hohlraum (8) der Halterung (2) zu dem Ring (46) des Elements, und zwar durch Ausübung einer Kraft auf das Schubelement (4) in Richtung der Halterung (2).

13. Verfahren nach dem vorherigen Anspruch, das einen dem Verfahrensschritt a) vorausgehenden Verfahrensschritt des Platzierens mindestens eines neuen Handschuhs und der Halterung in dem Raum vorsieht.

14. Verfahren nach Anspruch 12 oder 13, das einen dem Verfahrensschritt b) vorausgehenden Verfahrensschritt des Zurückholens des gebrauchten Handschuhs vorsieht.

15. Verfahren nach einem der Ansprüche 12 bis 14, bei dem ein System zum Auswechseln eines Handschuhs nach Anspruch 11 zum Einsatz kommt, das einen dem Verfahrensschritt a) vorausgehenden Verfahrensschritt des Platzierens eines Schutzdeckel in den Ring (36) des neuen Handschuhs vorsieht.

16. Verfahren nach dem vorherigen Anspruch, das einen dem Verfahrensschritt d) vorausgehenden Verfahrensschritt des Überführens des Schutzdeckels des Rings des neuen Handschuhs zu dem Ring des gebrauchten Handschuhs durch Ausübung einer Schubkraft von erster Stärke (F1) auf das Schubelement in Richtung der Halterung vorsieht.

17. Verfahren nach dem vorherigen Anspruch, bei dem in Verfahrensschritt d) das Überführen durch Ausübung einer Schubkraft von zweiter Stärke (F2), die größer ist als die erste Stärke (F1), auf das Schubelement in Richtung der Halterung erfolgt, um den Ring des neuen Handschuhs von der Halterung zu dem Ring des Elements zu überführen und den Ring des gebrauchten Handschuhs von dem Ring des Elements zu dem Schubelement zu überführen.

18. Verfahren nach einem der Ansprüche 12 bis 17, das einen dem Verfahrensschritt d) nachfolgenden Verfahrensschritt des Zurückziehens des mit dem gebrauchten Handschuh beladenen Schubelements und des Zurückziehens des Rings des neuen Handschuhs von der Halterung vorsieht.
